# FASCICULE DE BREVET EUROPEEN

(11) **EP 0 693 367 B1**
(45) Date de publication et mention de la délivrance du brevet: **21.06.2000**
(21) Numéro de dépôt: 95401644.0
(22) Date de dépôt: 07.07.1995
(51) Int. Cl.: B32B 27/08, C08L 77/00, C08L 51/06

(54) **Matériau comprenant un copolymère à blocs polyamides et polyéthers, adhérant à un caoutchouc d'EPDM vulcanisé**
Material enthaltend ein Copolymer mit Polyamid- und Polyätherblocken, auf dem ein vernetztes EPDM-Kautschuk haftet
Material comprising a copolymer having polyamide and polyether blocks, adhering to a vulcanized EPDM rubber

(30) Priorité: 19.07.1994 FR 9408905
(43) Date de publication de la demande: 24.01.1996
(73) Titulaire: ELF ATOCHEM S.A., 92800 Puteaux, Hauts-de-Seine (FR)
(72) Inventeur: Betremieux, Isabelle, F-27270 Beaumontel (FR); Dousson, Christian, F-27900 St-Victor de Chretienville (FR); Marcq, Philippe, F-27300 Bernay (FR)
(74) Mandataire: Neel, Henry

(56) Documents cités:
- EP-A- 0 341 068
- EP-A- 0 393 409
- EP-A- 0 459 862
- US-A- 4 950 436
- DATABASE WPI Week 9440, Derwent Publications Ltd., London, GB; AN 94-321815 & JP-A-6 246 887 (TOKAI RUBBER IND LTD) 6 Septembre 1994
- DATABASE WPI Week 9010, Derwent Publications Ltd., London, GB; AN 90-070296 & JP-A-2 022 050 (TOKAI RUBBER IND LTD) 24 Janvier 1990

## Description

L'invention concerne un matériau comprenant :
- une composition de polymères A comprenant :
   1) au moins un produit (A1) choisi parmi les copolymères ayant des blocs polyamides et des blocs polyéthers,
   2) au moins un produit (A2) choisi parmi le polyéthylène, les copolymères de l'éthylène, le polypropylène, les copolymères du propylène, ces produits étant greffés par un diacide carboxylique insaturé ou son anhydride,
- un caoutchouc EPDM ou EPM vulcanisé,
- la composition de polymères A et le caoutchouc vulcanisé adhérant directement l'un à l'autre.

Elle concerne par exemple des joints en EPDM revêtus d'un film à base dudit copolymère à blocs adhérant sur l'EPDM essentiellement sans adhésif.

Le film comprend (i) un copolymère séquencé ayant des blocs polyamides et des blocs polyéthers et (ii) un polyéthylène ou polypropylène greffé par de l'anhydride maléique et contenant éventuellement des greffons polyamides. Le film à base de copolymère à blocs peut aussi servir de liant et être lui-même revêtu d'un autre film, on a donc successivement EPDM, film à base de polyamide, autre film.

US 5 154 979 (correspondant à EP 0 393 409) décrit des objets obtenus par co-injection de deux polymères incompatibles. Pour obtenir une bonne adhérence le long de la ligne de ressoudure séparant les deux polymères, on ajoute à l'un des polymères une polyoléfine greffée. Les exemples décrivent des mélanges de polyamide, de polypropylène greffé par de l'anhydride maléique et des fibres de verre qui adhèrent sur du SEBS (copolymère bloc styrène-éthylène / butène-styrène) ou sur du Santoprène qui est un polypropylène chargé de caoutchouc EPDM vulcanisé.

DE 3 914 011 décrit des tuyaux ayant une couche intérieure en polyamide ou mélange de polyamide et de polyoléfine recouverte de caoutchouc pouvant être de l'EPDM. Il est possible d'ajouter un adhésif entre ces deux couches. Ces couches sont ensuite recouvertes de renforts et finalement de caoutchouc.

EP 266 982 décrit des élastomères thermoplastiques revêtus de polyamide, polyuréthane ou polyester. Les élastomères thermoplastiques sont obtenus par la réaction de caoutchouc oléfinique réticulable (EPDM), d'une polyoléfine (polypropylène) et d'un acide insaturé, d'un époxyde ou monomère hydroxy insaturé. Ces produits sont utiles comme glissières de vitres de voiture.

On a maintenant trouvé un procédé beaucoup plus simple pour obtenir de l'EPDM vulcanisé revêtu de copolymère à blocs polyamides et polyéthers. Il suffit d'ajouter une polyoléfine greffée par de l'anhydride maléique au copolymère à blocs polyamides et polyéthers pour obtenir une adhérence telle que la séparation ne puisse se faire que par rupture du film de copolymère ou de l'EPDM.

Les polymères à blocs polyamides et blocs polyéthers (ci-après quelquefois désignés "polyéther bloc amide") résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga-dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne. Avantageusement, les blocs polyamides sont en polyamide-12 ou en polyamide 6.

La masse molaire moyenne en nombre Mₙ des séquences polyamides est comprise entre 300 et 15 000 et de préférence entre 600 et 5 000. La masse Mₙ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers, qu'ils proviennent de la copolycondensation de séquences polyamides et polyéthers préparées auparavant ou d'une réaction en une étape, présentent, par exemple, des duretés Shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Que les blocs polyéthers dérivent du polyéthylène glycol, du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient simultanément des motifs différents tels que des motifs dérivés de l'éthylène glycol (-OC₂H₄-), du propylène glycol 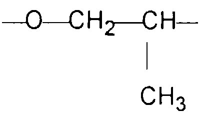 ou encore du tétraméthylène glycol (-O-(CH₂)₄-).

De préférence, le polymère à blocs polyamides et blocs polyéther comprend un seul type de blocs polyamides et un seul type de blocs polyéthers. On utilise avantageusement des polymères à blocs PA-12 et blocs PTMG et des polymères à blocs PA-6 et blocs PTMG.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther.

Quant à la partie A2 de la composition de polymères A choisie parmi les copolymères de l'éthylène, on peut citer par exemple les copolymères éthylène-alpha oléfine ou les copolymères de l'éthylène avec au moins un motif choisi parmi les (méth)acrylates d'alkyle et les esters vinyliques d'acides carboxyliques saturés.

Quant aux produits A2, à titre d'exemple d'anhydride, on peut citer l'anhydride citraconique, l'anhydride itaconique, l'anhydride tetrahydrophtalique, l'anhydride méthyl-2-maléique, l'anhydride diméthyl-2,3-maléique et l'anhydride maléique.

Le greffage de l'anhydride peut s'effectuer sur le polymère à l'état fondu ou en milieu solvant. Le taux de greffage, c'est-à-dire le poids des greffons par rapport au polymère greffé peut être compris entre 0,05 et 5 %.

Les proportions de A1 et A2 peuvent varier de 70 parties de A1 pour 30 parties de A2 à 30 parties de A1 pour 70 parties de A2.

Selon une forme avantageuse de l'invention, le produit A2 est en plus greffé par des polyamides ou des oligomères de polyamides monofonctionnels pouvant réagir avec l'acide, le diacide ou l'anhydride. De préférence, on utilise les mêmes motifs polyamides que ceux existant dans les produits A1.

Par exemple, on ajoute sur le (co)polymère greffé A2 l'oligomère monoaminé de polyamide, P, de formule : 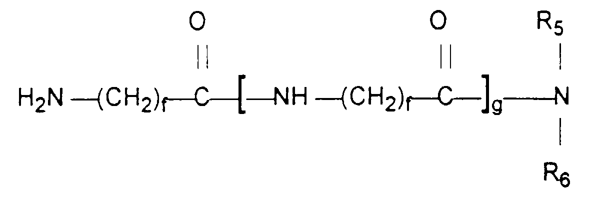 dans laquelle :
f est compris entre 3 et 11
g est compris entre 5 et 80
R₅ est l'hydrogène ou un alkyle contenant jusqu'à 20 atomes de carbone,
R₆ est un groupement alkyle ou alcényle ayant jusqu'à 20 atomes de carbone un radical cycloaliphatique, un radical aromatique ou une combinaison des précédents.

Cet oligomère monoaminé de polyamide peut être obtenu par polycondensation d'un amino-acide de formule : 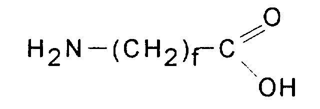 ou par polyaddition d'un lactame de formule : 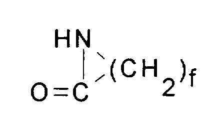 dans lesquelles f a la signification donnée précédemment, en présence d'un limitateur monofonctionnel de polymérisation de formule : 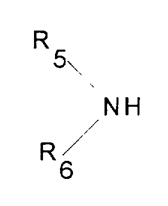 dans laquelle R₅ et R₆ ont la signification donnée précédemment.

Les monomères amino-acides ou lactames préférés pour la synthèse de l'oligomère monoaminé utilisable selon l'invention sont choisis parmi le caprolactame, l'acide amino-11-undécanoïque ou le dodécalactame.

Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300° C, sous vide ou sous atmosphère inerte, avec agitation du mélange réactionnel.

La longueur de chaîne moyenne de l'oligomère est déterminée par le rapport molaire initial entre le monomère polycondensable ou le lactame et le limitateur monofonctionnel de polymérisation.

Pour le calcul de la longueur de chaîne moyenne, on compte habituellement une molécule de limitateur de chaîne pour une chaîne d'oligomère.

L'addition de l'oligomère monoaminé de polyamide sur le (co)polymère greffé s'effectue par réaction d'une fonction amine de l'oligomère avec au moins une fonction anhydride ou acide du (co)polymère greffé. On crée ainsi des liaisons amides ou imides.

On réalise l'addition de l'oligomère sur le (co)polymère greffé, de préférence à l'état fondu. On peut aussi, dans une extrudeuse, malaxer l'oligomère et le (co)polymère à une température généralement comprise entre 230 et 250° C. Le temps de séjour moyen de la matière fondue dans l'extrudeuse peut être compris entre 15 secondes et 5 minutes, et de préférence entre 1 et 3 minutes.

L'addition de l'oligomère sur le (co)polymère greffé est évaluée par extraction sélective des oligomères de polyamide libres, c'est-à-dire ceux qui n'ont pas réagi pour former le copolymère greffé final.

Le caoutchouc EPDM est un copolymère de l'éthylène, du propylène et d'un diène, des sites insaturés du diène pouvant être vulcanisés au soufre. Les diènes sont, soit des dioléfines à chaîne droite non conjuguées, soit des diènes cycliques ou bicycliques. A titre d'exemple de diènes, on peut citer le 1,4-hexadiène, le dicyclopentadiène ou l'éthylène-norbornène, la quantité de diène peut être comprise, par exemple, entre 1 et 10 % en poids de l'EPDM. Le caoutchouc EPM est un copolymère éthylène propylène.

On ne sortirait pas du cadre de l'invention en ajoutant à l'EPM ou à l'EPDM des caoutchoucs tels que les SBR et NBR pourvu que l'EPDM ou EPM reste le composant majeur.

Le matériau de l'invention peut être une feuille de caoutchouc EPDM ou EPM vulcanisé recouvert d'un film de la composition de polymères A. Il peut être aussi un joint ou un profilé constitué d'une âme métallique déformable recouverte de caoutchouc EPDM ou EPM vulcanisé, un film de la composition de polymères A recouvrant tout ou partie de l'EPDM ou EPM. Ces profilés sont, par exemple, des joints de portières d'automobiles, l'âme métallique déformable permet d'agrafer ou de pincer le matériau de l'invention sur la carosserie de l'automobile.

Le matériau de l'invention peut aussi se présenter sous la forme d'un tuyau, en EPDM ou EPM vulcanisé recouvert à l'extérieur et/ou à l'intérieur d'un film de la composition de polymères A.

Le matériau de l'invention peut être produit par laminage ou coextrusion d'un film de la composition de polymères A sur le caoutchouc EPDM ou EPM vulcanisé. On peut aussi coextruder l'EPDM ou l'EPM avant vulcanisation avec le film de la composition de polymères A puis vulcaniser le caoutchouc pourvu que la composition de polymères A supporte la température de vulcanisation. Cette variante n'est possible que si la composition de polymères A a un point de fusion plus élevé que la température de vulcanisation de l'EPDM ou l'EPM, par exemple pour les mélanges à forte teneur en polyamide.

Selon une autre forme de l'invention, on peut recouvrir le matériau de l'invention par un autre polymère B, dans ce cas le film de la composition de polymères A joue le role de liant entre le caoutchouc EPDM ou EPM vulcanisé et le polymère B.

Ce polymère B est un polymère ou un mélange de polymères de préférence compatible avec la composition de polymères A.

B peut être choisi parmi les polyamides, les alliages de polyamides, les copolymères ayant des blocs polyamides et des blocs polyéthers.

De préférence, B est le même produit que A1.

Par exemple, un matériau de l'invention est un profilé contenant une âme métallique déformable recouverte de caoutchouc EPDM ou EPM vulcanisé lui-même recouvert d'un liant en composition de Polymères A, puis sur le liant est un film en polymère B.

Par exemple, le liant a une épaisseur de 10 à 50 µm et le film de polymère B a une épaisseur de 50 à 250 µm.

### Exemple 1

Dans une extrudeuse mono-vis dont la vitesse de la vis est réglée à 150 min⁻¹, on mélange 50 parties de polyéther bloc amide (A1) et 50 parties de polypropylène greffé PA11 (A2).

La température d'extrusion est comprise entre 225 et 250° C et le débit de l'extrudeuse est fixé à 20 kg/h.

En sortie de filière la composition (I) est obtenue sous forme de joncs de granulométrie moyenne égale à environ 3 mm.

Le polyéther bloc amide utilisé est constitué de 66 % de séquences PA12 (Mn = 2000) et de 33 % de séquences PTMG (Mn = 1000) commercialisé par ELF ATOCHEM sous la dénomination PEBAX.

Le PPgPA11 a été obtenu en greffant un PP maléisé par 25 % en masse d'oligomères de PA11 (Mn = 2800).

L'EPDM utilisé, le VISTALON 6630 de chez EXXON, a été formulé de façon classique avec du noir de carbone, une huile paraffinique et un système de vulcanisation au soufre.

Le composite EPDM / (I) peut être réalisé soit par surmoulage, soit par reprise d'extrusion. Nous décrirons ici le processus de surmoulage réalisé dans un moule de compression sachant que des essais en extrusion, ont conduit aux mêmes valeurs d'adhésion.
a) Préparation de l'ébauche de caoutchouc: l'ébauche est découpée à l'aide d'un emporte-pièce, aux dimensions de 100x40x4 mm et vulcanisée à 180° C pendant 5 min.
b) Préparation de l'ébauche de la composition (I) : des films d'environ 1 mm d'épaisseur ont été obtenus par compression moulage et découpés à l'emporte-pièce aux dimensions de 100x40x1mm.
c) Dans le moule de compression, la composition (I) est portée à 200° C (état fondu) pendant 3 min sans pression à la surface de l'EPDM vulcanisé. Une légère pression est appliquée pendant 2 min pour assurer la mise en forme de l'ébauche. Le composite est ensuite refroidi sous circulation d'eau.

Ce composite peut ensuite, selon les besoins de l'application, être recouvert d'une couche de PEBAX, de polyamide ou d'alliage à matrice polyamide.

La force de pelage est mesurée au bout de 24 heures selon la norme NFT 46008. Le pelage est amorcé en ménageant une zone sans adhésion entre l'élastomère vulcanisé et la composition (I) à l'aide d'un ruban adhésif d'aluminium placé sur la composition (I) avant le surmoulage de l'élastomère.

### Exemple 2

Dans les mêmes conditions qu'à l'exemple 1, on mélange une composition II constituée de 60 parties de polyéther bloc amide (A1) et 40 parties de polypropylène greffé PA12 (A2).

Le polyéther bloc amide utilisé est constitué de 66 % de séquences PA12 (Mn = 2000) et de 33 % de séquences PTMG (Mn = 1000) commercialisé par ELF ATOCHEM sous la dénomination PEBAX.

Le PPgPA12 a été obtenu en greffant un PP maléisé par 25 % en masse d'oligomères de PA12 (Mn = 2800).

On procède ensuite à la réalisation d'un composite II dans les mêmes conditions que celles décrites à l'exemple 1.

### Exemple 3

Dans les mêmes conditions qu'à l'exemple 1, on mélange une composition (III) constituée de 40 parties de polyéther bloc amide (A1) et 60 parties de polypropylène greffé PA6 (A2).

Le polyéther bloc amide utilisé est constitué de 66 % de séquences PA6 (Mn = 1300) et de 33 % de séquences PTMG (Mn = 650) et commercialisé par ELF ATOCHEM sous la dénomination PEBAX.

Le PPgPA6 a été obtenu en greffant un PP maléisé par 25 % en masse d'oligomères de PA6 (Mn = 2800).

On procède ensuite à la réalisation d'un composite III dans les mêmes conditions que celles décrites à l'exemple 1.

| **Exemple** | **1** | **2** | **3** |
|---|---|---|---|
| **Force de pelage daN/cm** | 1.90 | 2.10 | 2.00 |
| **Observation de rupture** | cohésive | cohésive | cohésive |

## Revendications

1. Matériau comprenant :
- une composition de polymères A comprenant :
1) au moins un produit (A1) choisi parmi les copolymères ayant des blocs polyamides et des blocs polyéthers,
2) au moins un produit (A2) choisi parmi le polyéthylène, les copolymères de l'éthylène, le polypropylène, les copolymères du propylène, ces produits étant greffés par un diacide carboxylique insaturé ou son anhydride,
- un caoutchouc EPDM ou EPM vulcanisé,
- la composition de polymères A et le caoutchouc vulcanisé adhérant directement l'un à l'autre.

2. Matériau selon la revendication 1 caractérisé en ce que le polymère (A2) est greffé par de l'anhydride maléique.

3. Matériau selon la revendication 1 ou 2 caractérisé en ce que le polymère (A2) est aussi greffé par un oligomère de polyamide monofonctionnel par réaction avec les fonctions acides ou anhydrides de (A2).

4. Matériau selon l'une des revendications 1 à 3 caractérisé en ce que c'est un profilé constitué d'une âme métallique déformable recouverte de caoutchouc EPDM ou EPM vulcanisé, un film d'une composition de polymères A recouvrant tout ou partie du caoutchouc.

5. Matériau selon l'une des revendications 1 à 4 caractérisé en ce que le film de la composition de polymères A est recouvert d'un polymère B compatible avec la composition de polymères A.

## Claims

1. Material comprising:
- a composition of polymers A comprising:
1) at least one product (A1) chosen from copolymers having polyamide blocks and polyether blocks,
2) at least one product (A2) chosen from polyethylene, ethylene copolymers, polypropylene and propylene copolymers, these products being grafted by an unsaturated dicarboxylic acid or its anhydride,
- a vulcanized EPDM or EPM rubber,
- the composition of polymers A and the vulcanized rubber adhering directly to each other.

2. Material according to Claim 1, characterized in that the polymer (A2) is grafted by maleic anhydride.

3. Material according to Claim 1 or 2, characterized in that the polymer (A2) is also grafted by a monofunctional polyamide oligomer by reaction with the acid or anhydride functional groups of (A2).

4. Material according to one of Claims 1 to 3, characterized in that this is a profiled strip consisting of a deformable metal core covered with vulcanized EPDM or EPM rubber, a film of a composition of polymers A covering all or part of the rubber.

5. Material according to one of Claims 1 to 4, characterized in that the film of the composition of polymers A is covered with a polymer B compatible with the composition of polymers A.

## Patentansprüche

1. Material, umfassend
- eine Zusammensetzung von Polymeren A, die folgendes umfassen:
1) mindestens ein Produkt (A1), das unter Copolymeren mit Polyamidblöcken und Polyetherblöcken ausgewählt ist,
2) mindestens ein Produkt (A2), das unter Polyethylen, Ethylen-Copolymeren, Polypropylen und Propylen-Copolymeren ausgewählt ist, wobei diese Produkte mit einer ungesättigten Dicarbonsäure oder einem Anhydrid davon gepfropft sind, und
- einen vulkanisierten EPDM- oder EPM-Kautschuk,
- wobei die Zusammensetzung der Polymeren A und der vulkanisierte Kautschuk direkt aneinander haften.

2. Material nach Anspruch 1, dadurch gekennzeichnet, daß das Polymere (A2) mit Maleinsäureanhydrid gepfropft ist.

3. Material nach Anspruch 1 oder 2, dadurch gekennzeichnet, daß das Polymere (A2) ferner mit einem monofunktionellen Polyamid-Oligomeren durch Umsetzung mit den Säure- oder Anhydridfunktionen von (A2) gepfropft ist.

4. Material nach einem der Ansprüche 1 bis 3, dadurch gekennzeichnet, daß es sich um ein Profilteil handelt, das aus einem deformierbaren metallischen Kern besteht, der mit vulkanisiertem EPDM- oder EPM-Kautschuk überzogen ist, wobei der Kautschuk in seiner Gesamtheit oder teilweise mit einem Film aus einer Zusammensetzung der Polymeren A überzogen ist.

5. Material nach einem der Ansprüche 1 bis 4, dadurch gekennzeichnet, daß der Film aus der Zusammensetzung der Polymeren A mit einem Polymeren B, das mit der Zusammensetzung der Polymeren A verträglich ist, überzogen ist.
